# EUROPEAN PATENT SPECIFICATION

(11) **EP 4 401 357 B1**
(45) Date of publication and mention of the grant of the patent: **25.02.2026**
(21) Application number: 22885595.3
(22) Date of filing: 30.09.2022
(51) Int. Cl.: H04L 9/30, H04W 12/106, H04L 9/06, H04W 12/06

(54) **SECURE COMMUNICATION METHOD AND RELATED DEVICE**
SICHERES KOMMUNIKATIONSVERFAHREN UND ZUGEHÖRIGE VORRICHTUNG
PROCÉDÉ DE COMMUNICATION SÉCURISÉE ET DISPOSITIF ASSOCIÉ

(30) Priority: 29.10.2021 CN 202111269593
(43) Date of publication of application: 17.07.2024
(73) Proprietor: Huawei Technologies Co., Ltd., Shenzhen, Guangdong 518129 (CN)
(72) Inventor: LOU, Chong, Shenzhen, Guangdong 518129 (CN); XU, Xiaoying, Shenzhen, Guangdong 518129 (CN); GU, Zhifang, Shenzhen, Guangdong 518129 (CN)
(74) Representative: Pfenning, Meinig & Partner mbB
(86) International application number: PCT/CN2022/123387
(87) International publication number: WO 2023/071712

(56) References cited:
- WO-A1-2018/184475
- WO-A1-2019/178755
- WO-A1-2021/134522
- CN-A- 106 341 848
- US-A1- 2005 149 823
- US-A1- 2010 199 159
- US-A1- 2019 174 311
- US-B1- 6 964 008
- "Chapter 9: ED - Menezes A J; Van Oorschot P C; Vanstone S A", 1996, XP001525009, ISBN: 978-0-8493-8523-0, Retrieved from the Internet <URL:http://www.cacr.math.uwaterloo.ca/hac/> [retrieved on 20241015]

## Description

### TECHNICAL FIELD

Embodiments of this application relate to the field of wireless communication, and in particular, to a secure communication processing technology and a computer-readable storage medium and a computer program product.

### BACKGROUND

A wireless communication system includes a terminal device, an access network device serving the terminal device, and a core network system. Based on protocol layer division formulated by the 3rd generation partnership project (3rd generation partnership project, 3GPP), the terminal device interacts with the access network device through an access stratum (access stratum, AS), and the terminal device interacts with the core network system through a non-access stratum (Non-access stratum, NAS). The access stratum includes a physical (physical, PHY) layer, a medium access control (medium access control, MAC) layer, a radio link control (radio link control, RLC) layer, a packet data convergence protocol (packet data convergence protocol, PDCP) layer, a radio resource control (radio resource control, RRC) layer, an optional service data adaptation protocol (Service Data Adaptation Protocol, SDAP) layer, and the like.

With development of a next-generation wireless communication system, because technologies such as virtual reality (virtual reality, VR) and augmented reality (augmented reality, AR) are continuously enhanced in new scenarios, various types of data of the terminal device are increasingly rich, but user data is more likely to be exposed in a network, resulting in a security risk.
US6964008B1 discloses a method and apparatus for generating checksum values for data segments retrieved from a data storage device for transfer into a buffer memory, is provided. A checksum list is maintained to contain checksum values, wherein the checksum list includes a plurality of entries corresponding to the data segments stored in the buffer memory, each entry for storing a checksum value for a corresponding data segment stored in the buffer memory. For each data segment retrieved from the storage device: a checksum value is calculated for that data segment using a checksum circuit; an entry in the checksum list corresponding to that data segment is selected; the checksum value is stored in the selected entry in the checksum list; and that data segment is stored in the buffer memory. Preferably, the checksum circuit calculates the checksum for each data segment as that data segment is transferred into the buffer memory.

### SUMMARY

Embodiments of this application provide a secure communication method, to reduce security risks caused by user data exposure.

The invention is defined in the appended set of claims. According to a first aspect of embodiments of this application, a secure communication method performed by a terminal device is provided. The terminal device may be an independently sold entire terminal, or may be at least one chip in an independently sold entire terminal or a circuit system that implements the communication method in an entire terminal. The communication method includes the following content.

The terminal device receives first information sent by an access network device. The first information indicates a correspondence between at least one piece of plaintext information and at least one security check value. The terminal device receives second information sent by the access network device. The second information carries a security check value. The terminal device searches, based on the second information, the correspondence for plaintext information to be used by the terminal device. If the plaintext information corresponding to the security check value is found, the terminal device determines that plaintext information corresponding to the security check value in the correspondence is the plaintext information to be used by the terminal device.

According to the technical solution provided in the first aspect, the correspondence between the plaintext information and the security check value is preconfigured for the terminal device by using the first information. The terminal device can store the correspondence. When receiving the second information that carries the security check value, the terminal device searches, based on the security check value, the correspondence for the plaintext information corresponding to the security check value. If the plaintext information corresponding to the security check value is found, the terminal device can determine the plaintext information to be used. If the plaintext information corresponding to the security check value is not found, it indicates that the plaintext information corresponding to the security check value does not exist or is invalid. This avoids a security risk caused by leakage of the plaintext information.

According to a second aspect, which is not covered by the claimed invention, a secure communication method used to be performed by a terminal device is provided. The terminal device may be an independently sold entire terminal, or may be at least one chip in an independently sold entire terminal or a circuit system that implements the communication method in an entire terminal. The communication method includes the following content.

The terminal device receives first information sent by an access network device. The first information indicates at least one security check value. The terminal device receives second information sent by the access network device. The second information carries plaintext information. The terminal device determines, based on the plaintext information, a security check value corresponding to the plaintext information, and searches the at least one security check value for the security check value corresponding to the plaintext information. If the security check value corresponding to the plaintext information is found, the terminal device determines that the plaintext information carried in the second information is plaintext information to be used by the terminal device.

According to the technical solution provided in the second aspect, the access network device preconfigures the at least one security check value for the terminal device, and the plaintext information is still indicated in a plaintext manner in subsequent communication. The terminal device can obtain, through calculation based on the plaintext information, the security check value corresponding to the plaintext information, and search the configured at least one security check value for the security check value obtained through calculation, to determine whether the plaintext information is valid, so as to reduce security risks caused because the plaintext information is tampered with.

Based on the technical solution in the first aspect or the second aspect, when the terminal device successfully receives the first information, the terminal device further sends response information for the first information to the access network device. The response information indicates that the first information is successfully received. In this way, the terminal device and the access network device have a consistent understanding of content indicated by the first information.

Optionally, if the terminal device does not find the plaintext information to be used, the terminal device discards the second information or sends third information to the access network device. The third information indicates that the plaintext information to be used by the terminal device is not found, or indicates that the second information is invalid. The terminal device may receive fourth information sent by the access network device. The fourth information indicates an update of the at least one security check value, or a method for calculating the at least one security check value, or indicates to perform cell handover.

Optionally, the at least one piece of plaintext information includes at least one of the following: cell identifier information of a serving cell, cell identifier information of a neighboring cell of the serving cell, identifier information of a cell group to which the serving cell belongs, identifier information of a cell group to which the neighboring cell of the serving cell belongs, beam information of the serving cell or the neighboring cell, and activation or deactivation information of a secondary cell of the terminal device.

According to a third aspect of embodiments of this application, a secure communication method performed by an access network device is provided. The access network device may be an independent base station, or may be at least one chip in a base station or a functional module that implements the communication processing method in a base station, for example, a distributed unit (distributed unit, DU) or a central unit (a central unit, CU) of the base station.

According to the method, the access network device sends first information to a terminal device. The first information indicates a correspondence between at least one piece of plaintext information and at least one security check value. The access network device sends second information to the terminal device. The second information carries a security check value. The access network device receives third information sent by the terminal device. The third information indicates that plaintext information to be used by the terminal device is not found, or indicates that the second information is invalid. The access network device sends fourth information to the terminal device. The fourth information indicates an update of the at least one security check value, or a method for calculating the at least one security check value, or indicates the terminal device to perform cell handover.

According to the technical solution provided in the third aspect, the access network device can preconfigure the correspondence between the plaintext information and the security check value for the terminal device. In subsequent communication, the access network device can indicate a security check value. The terminal device can search for corresponding plaintext information based on the security check value, and when receiving an indicator that is fed back by the terminal device and that indicates that the plaintext information is not found or is invalid, indicate, in a timely manner, an update of the security check value, or the calculation method, or indicate to perform cell handover, to reduce security risks caused by user data exposure.

According to a fourth aspect, which is not covered by the claimed invention, a secure communication method performed by an access network device is provided. The access network device may be an independent base station, or may be at least one chip in a base station or a functional module that implements the communication processing method in a base station, for example, a DU or a CU of a base station.

According to the method, the access network device sends first information to a terminal device. The first information indicates at least one security check value. The access network device sends second information to the terminal device. The second information carries plaintext information. The access network device receives third information sent by the terminal device. The third information indicates that plaintext information to be used by the terminal device is not found, or indicates that the second information is invalid. The access network device sends fourth information to the terminal device. The fourth information indicates an update of the at least one security check value, or a method for calculating the at least one security check value, or indicates the terminal device to perform cell handover.

According to the technical solution provided in the fourth aspect, the access network device can preconfigure the at least one security check value for the terminal device. In subsequent communication, the access network device can indicate plaintext information, so that the terminal device can determine a security check value corresponding to the plaintext information, and when receiving an indicator that is fed back by the terminal device and that indicates that the security check value is not found or is invalid, indicate, in a timely manner, an update of the security check value, or the calculation method, or indicate to perform cell handover, to reduce security risks caused by user data exposure.

Based on the technical solution provided in the third aspect or the fourth aspect, the access network device can receive response information that is for the first information and that is sent by the terminal device. The response information indicates that the first information is successfully received. This ensures that the access network device and the terminal device have a consistent understanding of the first information.

According to a fifth aspect of embodiments of this application, a terminal device is provided. The terminal device includes a transceiver unit and a processing unit. The transceiver unit may be divided into a receiving unit and a sending unit. The transceiver unit is configured to perform receiving and sending actions in any one of the first aspect, the second aspect, and the possible implementations. The processing unit is configured to perform processing actions such as determining in any one of the first aspect, the second aspect, and the possible implementations. In a specific physical implementation, the transceiver unit may be a transceiver circuit or a transceiver, and may include a receiver and a transmitter. The processing unit may be a processing circuit or a processor. Optionally, the terminal device may be an independently sold terminal device, or may be a chip or a circuit system in a terminal device. The chip or the circuit system includes a plurality of gate circuits to implement functions of the foregoing functional units. The communication apparatus provided in the fifth aspect can achieve the beneficial effects achieved in any one of the first aspect, the second aspect, and the possible implementations. Details are not described again.

According to a sixth aspect of embodiments of this application, an access network device is provided. The access network device includes a sending unit, a processing unit, and a receiving unit. The sending unit and the receiving unit are respectively configured to perform sending and receiving actions in any one of the third aspect, the fourth aspect, and the possible implementations. The processing unit is configured to perform processing actions such as adjustment in any one of the third aspect, the fourth aspect, and the possible implementations. In a specific physical implementation, the sending unit may be a transmitter, and the receiving unit may be a receiver. Optionally, the access network device may be an independently sold base station, or may be a hardware entity split from a base station, for example, a distributed unit (distributed unit, DU) or a (central unit, CU), or may be a chip or a circuit system in a base station. The chip or the circuit system includes a plurality of gate circuits to implement functions of the foregoing functional units. The access network device provided in the sixth aspect can achieve the beneficial effects achieved in any one of the third aspect, the fourth aspect, and the possible implementations. Details are not described again.

According to a seventh aspect of embodiments of this application, a communication processing apparatus is provided, including a processor and a memory. The memory stores a computer program. When the computer program is invoked by the processor, the communication processing apparatus is enabled to implement the method according to any one of the first aspect, the second aspect, the third aspect, the fourth aspect, and the possible implementations of the first aspect, the second aspect, the third aspect, and the fourth aspect. Optionally, the communication processing apparatus provided in the seventh aspect may be a chip system, or may be an independently sold device including a chip system.

According to an eighth aspect of embodiments of this application, a computer-readable storage medium is provided. The computer-readable storage medium stores a computer program, and the computer program is invoked by a computer to implement the method according to any one of the first aspect, the second aspect, the third aspect, the fourth aspect, and the possible implementations of the first aspect, the second aspect, the third aspect, and the fourth aspect. The computer-readable storage medium provided in the eighth aspect may be included in a chip system, or may be included in an independently sold device including a chip system.

According to a ninth aspect of embodiments of this application, a computer program product is provided. When the computer program product is invoked by a computer, the method according to any one of the first aspect, the second aspect, the third aspect, the fourth aspect, and the possible implementations of the first aspect, the second aspect, the third aspect, and the fourth aspect is implemented. The computer program product provided in the ninth aspect may be computer software code, and may be included in a chip system, or may be included in an independently sold device including a chip system.

### BRIEF DESCRIPTION OF DRAWINGS

FIG. 1 is a schematic diagram of an architecture of a communication system according to an embodiment of this application;
FIG. 2 is a schematic diagram of protocol layer division of an architecture of a communication system according to an embodiment of this application;
FIG. 3 is a schematic diagram of a system interaction according to an embodiment of this application;
FIG. 4 is a schematic diagram of another system interaction according to an embodiment of this application;
FIG. 5 is a schematic diagram of still another system interaction according to an embodiment of this application;
FIG. 6 is a schematic diagram of a unit structure of a communication processing apparatus according to an embodiment of this application; and
FIG. 7 is a schematic diagram of a physical structure of a communication processing apparatus according to an embodiment of this application.

### DESCRIPTION OF EMBODIMENTS

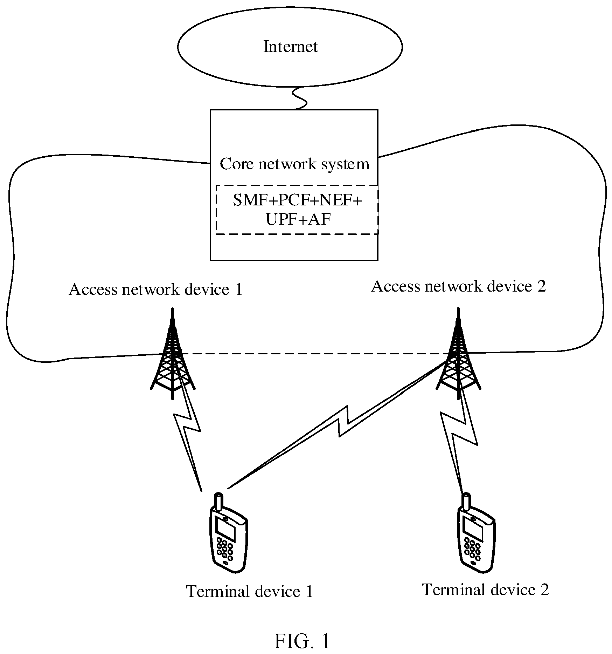

A communication system shown in FIG. 1 includes a terminal device, an access network device, and a core network system. The access network device may be various transmission reception points (transmission reception points, TRPs), for example, a base station, a wireless local area network access point, and a relay node, and provides an access service in a licensed spectrum or an access service in an unlicensed spectrum for the terminal device. The access network device is connected to the core network system in a wired or wireless manner. The terminal device includes user equipment (User Equipment, UE), and is a device providing voice and/or data connectivity for a user, for example, a hand-held device or a vehicle-mounted device that has a wireless connection function. Common terminal devices include, for example, a mobile phone, a tablet computer, a notebook computer, a palmtop computer, a mobile internet device (mobile internet device, MID), and a wearable device, for example, a smartwatch, a smart band, a pedometer, and various types of user equipment in a virtual reality technology. For the terminal device, one access network device may provide a communication service, or at least two access network devices may simultaneously provide a communication service by using a dual connectivity technology.

The terminal device and the access network device transmit uplink data and downlink data respectively in an uplink and a downlink through an air interface based on a protocol layer. The access network device may be used as an independent device, or may be split into different devices based on the protocol layer. For example, after the access network device is split based on the protocol layer, the access network device may include a central unit (central unit, CU) and at least one distributed unit (distributed unit, DU). The CU is configured to implement functions of a PDCP layer, an RRC layer, and a protocol layer above the RRC layer of the access network device. The DU is configured to implement functions of an RLC layer, a MAC layer, and a PHY layer of the access network device. A person skilled in the art may understand that, in the following implementations, a function of the access network device at the PDCP layer, the RRC layer, or the protocol layer above the RRC layer may be performed by the CU, and a function of the access network device at the RLC layer, the MAC layer, or the PHY layer is performed by the at least one DU. Therefore, in the following embodiments, a message at the PDCP layer, the RRC layer, and the protocol layer above the RRC layer may be generated by the CU, a message at the RLC layer, the MAC layer, or the PHY layer may be generated by the DU, and the CU may interact with the DU through an F1 interface.

A control plane of the core network system includes an access and mobility management function (Access and Mobility Management Function, AMF) entity, a session management function (Session Management Function, SMF) entity, a policy control function (Policy Control Function, PCF) entity, a network exposure function (Network Exposure Function, NEF) entity, an application function (application function, AF) entity, and a unified data management (Unified Data Management, UDM) entity. A user plane of the core network system includes a user plane function (User Plane Function, UPF) entity.

The communication system shown in FIG. 1 may be connected to an internet in a wired or wireless manner. The internet includes application servers that provide various content services (for example, a multimedia movie and music). The terminal device may perform, through an application layer, data transmission with these application servers by using a corresponding application layer function. The application layer function is also referred to as an application program.

The communication system shown in FIG. 1 may be a wireless communication system, for example, a new radio (New Radio, NR) system (also referred to as a 5G system), an LTE (long term evolution, LTE) system, or a long term evolution-advanced (long term evolution-advanced, LTE-A) system.

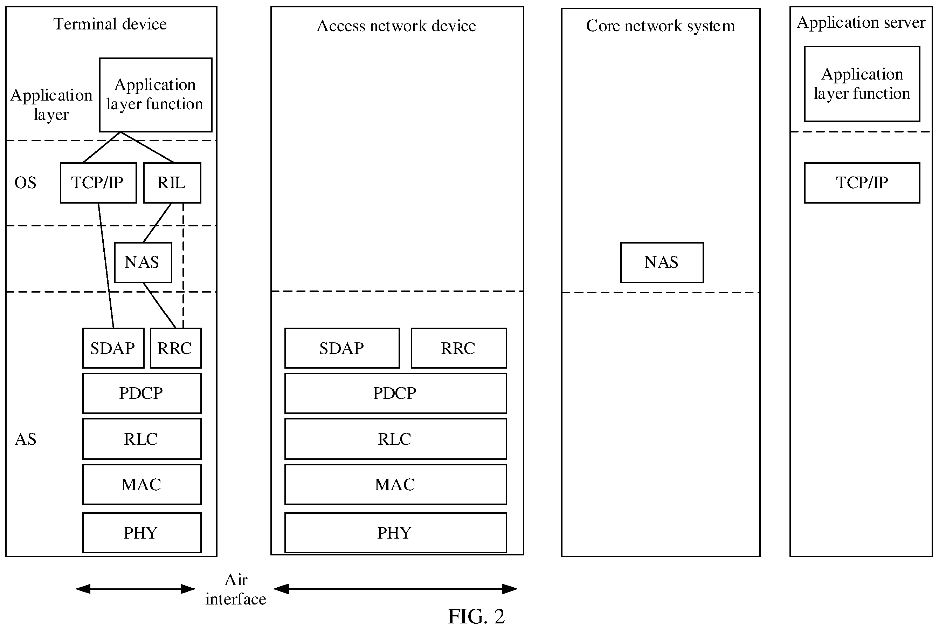

On the basis of FIG. 1, FIG. 2 further clarifies an architecture of the communication system obtained after division based on the protocol layers. The terminal device includes an access stratum that is a peer layer of the access network device, a non-access stratum that is a peer layer of the core network system, an operating system (operating system, OS) layer, and an application layer.

The peer access stratum is divided into a control plane and a user plane. The control plane includes an RRC layer, a PDCP layer, an RLC layer, a MAC layer, and a PHY layer. The user plane includes an SDAP layer, a PDCP layer, an RLC layer, a MAC layer, and a PHY layer. The operating system layer includes a transmission control protocol/internet protocol (Transmission Control Protocol/Internet Protocol, TCP/IP) layer and a radio interface layer (radio interface layer, RIL). The application layer of the terminal device may directly communicate with the RRC layer through the RIL, or may communicate with the RRC layer through the non-access stratum, or may communicate with another entity at the access stratum through the non-access stratum, or directly communicate with another entity at the access stratum. Functions of at least one protocol layer at the access stratum may be integrated into a modem. The modem may be an independent modem chip. A channel between the PDCP layer and the RLC layer is referred to as an RLC channel. A channel between the RLC layer and the MAC layer is referred to as a logical channel. A channel between the MAC layer and the PHY layer is referred to as a transmission channel. A channel below the physical layer is a PHY layer channel. Common physical layer channels include a physical uplink control channel (physical uplink control channel, PUCCH), a physical downlink control channel (physical downlink control channel, PDCCH), a physical uplink shared channel (physical uplink shared control channel, PUSCH), and a physical downlink shared channel (physical downlink shared control channel, PDSCH).

In embodiments of this application, from a perspective of a physical implementation, the access network device may be a base station, a wireless local area network access point, or the like, or may be a chip or a circuit system in a base station or a wireless local area network access point. The terminal device may be user equipment, or a chip or a circuit system in user equipment.

In a current wireless communication process, there are more requirements on service types of the terminal device, and there are increasingly high requirements on quality of services that can be provided by a wireless communication system. This requires that the wireless communication system can improve a throughput, and further ensure good quality of a communication link. The former may be implemented by using a carrier aggregation technology, and the latter may be implemented by performing cell handover in a timely manner when quality of the communication link deteriorates, so that the terminal device can use a good-quality communication link.

In a scenario in which the carrier aggregation technology is used, the access network device may dynamically control activation or deactivation of a secondary cell of the terminal device by using activation or deactivation information of the secondary cell, for example, a MAC control element. When the secondary cell of the terminal device is activated, the terminal device may perform communication by using the secondary cell, to improving the throughput. When the secondary cell of the terminal device is deactivated, the terminal device cannot perform communication by using the secondary cell, to save communication resources by reducing the throughput. Optionally, the MAC control element may activate or deactivate the secondary cell in a form of bitmap. The MAC control element includes at least N bits. A location of an i^{th} bit in the N bits indicates an i^{th} secondary cell. A bit state (1/0) of the i^{th} bit indicates whether the secondary cell is activated or deactivated. Optionally, the MAC control element may alternatively activate or deactivate the secondary cell in a form of identifier of the secondary cell and a secondary cell activation/deactivation state indicator. In this case, the MAC control element includes at least one field combination. Each field combination includes a bit field indicating an identifier of the i^{th} secondary cell and a bit field (a bit 0/1) indicating whether the i^{th} secondary cell is activated. The MAC control element may include a plurality of field combinations, to traverse all secondary cells configured for the terminal device.

In this scenario, the MAC control element is sent in a form of plaintext information. An unauthorized user may infer a track of an authorized user by observing an activation status of a secondary cell of the authorized user for a long time. For example, the unauthorized user infers, based on the MAC control element, that an activation path of the authorized user is: activation of a secondary cell 1 -> activation of a secondary cell 3 -> activation of a secondary cell 6. Then, the unauthorized user moves continuously in an area. If a same activation path is obtained, an actual movement track of the authorized user may be inferred.

In a cell handover scenario, as the terminal device moves to an edge of a current serving cell, because signal quality of a communication link deteriorates, the access network device may send a handover command to the terminal device, to indicate the terminal device to hand over from a source cell to a target cell. Both the source cell and the target cell are covered by the access network device, or may be covered by different access network devices. Because the handover command includes plaintext information such as a physical cell identifier of the target cell, the unauthorized user may obtain a handover path of the authorized user, for example, a physical cell 1 -> a physical cell 3 -> a physical cell 4, to further infer the actual movement track of the authorized user. For an unauthorized base station, a physical cell identifier of a target cell in a handover command may also be tampered with. As a result, the terminal device performs incorrect handover.

The foregoing two scenarios are merely examples. Actually, direct sending of plaintext information causes direct exposure of user data to a network, causing a security risk.

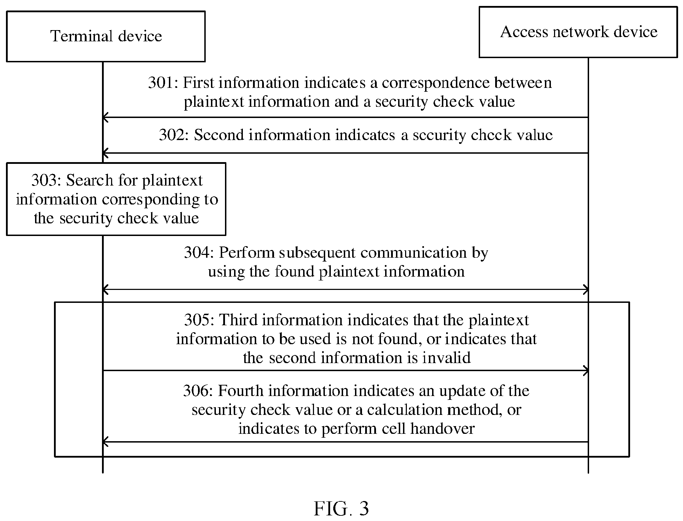

In view of the foregoing problem, a first embodiment of this application provides a secure communication method. As shown in a schematic diagram of system interaction in FIG. 3, the method includes the following content. Plaintext information to be actually used by a terminal device is replaced by an access network device by using a security check value.

301: The terminal device receives first information sent by the access network device, where the first information indicates a correspondence between at least one piece of plaintext information and at least one security check value.

In 301, the first information may be carried in an RRC message, for example, an RRC reconfiguration message, an RRC resume message, or an RRC release message. The RRC reconfiguration message is used to establish, modify, and release a radio bearer for the terminal device. The RRC resume message is used to resume a suspended RRC connection when the terminal device is in an RRC inactive state. The RRC release message is used to release a suspended RRC connection when the terminal device is in an RRC inactive state.

When the first information is carried in the RRC message, encryption and/or integrity protection may be performed on the RRC message at a PDCP layer. An integrity protection (Integrity Protection) function may prevent valid data of a user from being tampered with. When the terminal device finds that integrity verification fails, the terminal device triggers an update process of an encryption/decryption key of communication data, and performs confidentiality protection on the communication data by using a new key. In the conventional technology, a transmit end is, for example, a terminal device in an uplink or an access network device in a downlink, and performs integrity protection on a PDCP protocol data unit (protocol data unit, PDU) at the PDCP layer. The transmit end may generate, at the PDCP layer, a 32-bit message authentication code (message authentication code-integrity, MAC-I) for the PDCP PDU based on an integrity protection algorithm configured at an RRC layer, and place the 32-bit message authentication code into a MAC-I field of the PDCP PDU. A receive end is, for example, an access network device in an uplink or a terminal device in a downlink. After a PDCP PDU is received, an expected message authentication code XMAC-I is calculated based on the same integrity protection algorithm. If the XMAC-I is the same as the MAC-I carried in the PDCP PDU, it is determined that integrity verification succeeds. Otherwise, it is determined that integrity verification fails.

In 301, the at least one security check value may be a fixed-length number or character string derived based on a security algorithm. The security algorithm may be a hash (Hash) algorithm. The hash algorithm can output input information of any length as fixed-length numbers or character strings. These numbers or character strings are referred to as hash check values. Hash check values obtained by using same input information are the same. Hash check values obtained by using different input information differ greatly. Common hash algorithms include MD5 that outputs a 128-bit value, SHA-1 that outputs a 160-bit value, and SHA-256 that outputs a 256-bit value. The at least one security check value may be a hash check value obtained based on a hash algorithm, or may be a "truncated hash check value" obtained by truncating a hash check value to reduce an output length. For example, a 256-bit hash check value output by SHA-256 may be truncated from a least significant bit or a most significant bit, to obtain a 32-bit value.

Optionally, the at least one piece of plaintext information includes at least one of the following:
cell identifier information of a serving cell, cell identifier information of a neighboring cell of the serving cell, identifier information of a cell group to which the serving cell belongs, identifier information of a cell group to which the neighboring cell of the serving cell belongs, beam information of the serving cell or the neighboring cell, and activation or deactivation information of a secondary cell of the terminal device.

Optionally, the at least one piece of plaintext information is a combination of the cell identifier information and the beam information. For example, the at least one piece of plaintext information includes the cell identifier information of the serving cell and the beam information of the serving cell, and indicates the serving cell and the beam information corresponding to the serving cell, so that the terminal device may communicate with the serving cell based on the beam information.

The terminal device may have one or more serving cells. In a single-base station carrier aggregation scenario, a plurality of serving cells are covered by a same base station. In an interbase station carrier aggregation scenario (also referred to as dual connectivity), a plurality of serving cells may be covered by a primary base station and a secondary base station. A plurality of serving cells covered by the primary base station are referred to as a primary cell group. A plurality of serving cells covered by the secondary base station are referred to as a secondary cell group. A primary cell in the secondary cell group is also referred to as a primary secondary cell.

Optionally, the cell identifier information may be a physical cell identifier (physical cell identifier, PCI), a serving cell index (serving cell index), a global cell identifier (global cell identifier, CGI), or the like. The identifier information of the cell group may be an identifier of a primary cell group or an identifier of a secondary cell group in a dual connectivity scenario.

The beam information may indicate a transmission direction of a physical layer channel, which may be a transmission direction of a PDSCH or a PDCCH, or may be a transmission direction of a PUCCH or a PUSCH. A reference signal associated with beam information corresponding to the PDSCH or the PDCCH may be a sounding reference signal (sounding reference signal, SRS) or the like. A reference signal associated with beam information corresponding to the PUCCH or the PUSCH may be a synchronization signal, for example, a synchronization signal and physical broadcast channel (Synchronization Signal and Physical Broadcast Channel, SSB), or a channel state information reference signal (channel state information reference signal, CSI-RS).

The beam information of the serving cell or the neighboring cell is used to identify a transmission direction of information transmission when the terminal device communicates with the serving cell or the neighboring cell. The beam information may further indicate a transmission resource, so that the terminal device communicates with the serving cell in a beam direction that is of the transmission resource and that is indicated by the beam information.

The beam direction indicated by the beam information may be indicated by transmission configuration indicator (transmission configuration indication, TCI) information. Each piece of TCI information may indicate that a transmission direction of a physical layer channel (for example, the PUSCH, the PUCCH, the PDCCH, or a PDSCH) is the same as a beam direction of an associated reference signal, or indicate that there is a correlation, for example, a quasi co-location (Quasi Co-Location, QCL) relationship. The QCL relationship may be understood as that beam directions of physical layer channel transmission and an associated reference signal have a mapped channel characteristic, for example, a Doppler shift or a delay offset, so that the terminal device may infer, by using the beam direction of the associated reference signal, the beam direction of physical layer channel transmission, and consequently the terminal device performs physical layer channel transmission in the beam direction.

The correspondence that is between the at least one piece of plaintext information and the at least one security check value and that is indicated by the first information may be sent by the access network device to the terminal device by using a same message or different messages of a same message type. For example, the at least one piece of plaintext information is sent by using one RRC reconfiguration message, and then the at least one security check value is sent by using another RRC reconfiguration message. The at least one piece of plaintext information may be in a one-to-one correspondence with the at least one security check value.

Optionally, if messages of a same type and a same data structure (for example, a list structure) include the at least one piece of plaintext information and the at least one security check value, the terminal device may determine that there is a correspondence between the at least one piece of plaintext information and the at least one security check value. The at least one piece of plaintext information and the at least one security check value may be separately presented in a list structure, for example, a list {plaintext information 1, plaintext information 2, plaintext information 3, ...}, or a list {security check value 1, security check value 2, security check value 3, ...}. In this case, the first information includes both the at least one piece of plaintext information and the at least one security check value.

Optionally, the correspondence between the at least one piece of plaintext information and the at least one security check value is a function mapping relationship. The first information may indicate the function mapping relationship. The terminal device may obtain, through calculation based on the function mapping relationship, the at least one security check value obtained by mapping the one piece of plaintext information, or the at least one piece of plaintext information obtained by mapping the at least one security check value. In this case, the first information further includes the at least one security check value or the at least one piece of plaintext information.

Optionally, because the identifier information of the cell or the cell group is sensitive data having a higher security requirement, the at least one piece of plaintext information indicated by the first information includes at least the identifier information of the cell or the cell. If information bit overheads need to be reduced, the first information may not indicate non-sensitive data having a lower security requirement, such as the beam information. In this case, the beam information is still sent subsequently in a plaintext information manner in another message.

The terminal device may store the correspondence between the at least one piece of plaintext information and the at least one security check value for subsequent check.

Optionally, the terminal device further sends response information for the first information to the access network device. The response information indicates that the first information is successfully received. In this way, the terminal device and the access network device have a consistent understanding of the correspondence. Similarly, when the response information is an RRC message, integrity protection may be performed on the RRC message at the PDCP layer.

302: The access network device sends second information to the terminal device, where the second information carries a security check value.

In 302, the second information may be an RRC message, a physical layer channel (for example, the PDCCH or the PDSCH), or a MAC layer message (for example, a MAC control element).

When the second information is the RRC message, the RRC message may be an RRC rejection message, or a system information block (system information block, SIB). In this case, integrity protection may not be performed on the RRC message.

The security check value carried in the second information may be the foregoing hash check value or "truncated hash check value".

303: The terminal device searches, based on the second information, the correspondence for plaintext information corresponding to the security check value.

304: If the plaintext information corresponding to the security check value is found, the terminal device determines that the plaintext information corresponding to the security check value in the correspondence is plaintext information to be used by the terminal device, and performs subsequent communication.

Optionally, 305: If the plaintext information corresponding to the security check value is not found, the terminal device sends third information to the access network device of the terminal device, where the third information indicates that the plaintext information to be used by the terminal device is not found, or indicates that the second information is invalid.

The terminal device may start searching the correspondence based on the security check value carried in the second information. If the plaintext information corresponding to the security check value can be found, it indicates that the found plaintext information is the plaintext information to be actually used by the terminal device, and subsequent communication is performed based on the plaintext information. If the plaintext information corresponding to the security check value is not found, it indicates that the stored at least one piece of plaintext information does not match the security check value indicated by and carried in the second information, and consequently the plaintext information corresponding to the security check value is not found by the terminal device, or it indicates that the second information may be invalid because the second information is tampered with.

Optionally, the third information further carries a reason why the second information is invalid, and content indicated by the second information.

The reason why the second information is invalid may include: The terminal device does not find the plaintext information to be actually used, or the security check value carried in the second information does not exist. The content indicated by the second information may include the security check value carried in the second information, or second information received by the terminal device (so that the access network device checks whether the second information is consistent with the sent second information, to identify an attack and an attack means).

Optionally, if the plaintext information corresponding to the security check value is not found, the terminal device further discards the second information.

Optionally, after 305, the method further includes:
306: The access network device further sends fourth information to the terminal device, where the fourth information indicates an update of the at least one security check value, or a method for calculating the at least one security check value, or indicates the terminal device to perform cell handover.

In 306, the access network device receives a feedback of the third information, and may determine a reason why the terminal device does not find the plaintext information to be actually used. In one aspect, if the reason is that the security check values are inconsistent, the access network device may indicate, to the terminal device, the update of the at least one security check value or the method for calculating the at least one security check value, so that the terminal device updates the correspondence, and applies an updated correspondence to perform search again. In another aspect, if the reason is that communication link security of a current serving cell is not high, the current access network device may indicate the terminal device to hand over from the current serving cell to a target serving cell with relatively high communication link security.

According to the technical solution provided in the first embodiment, the access network device preconfigures the correspondence between the plaintext information and the security check value for the terminal device, and subsequently indicates, by using the security check value, the plaintext information to be actually used by the terminal device. The correspondence may be used for a plurality of times subsequently after being configured at a time. In subsequent communication, the security check value is used to replace plaintext information that is to be actually used and that is originally transmitted in the plaintext manner. This can reduce security risks caused by possible leakage of the plaintext information to be used.

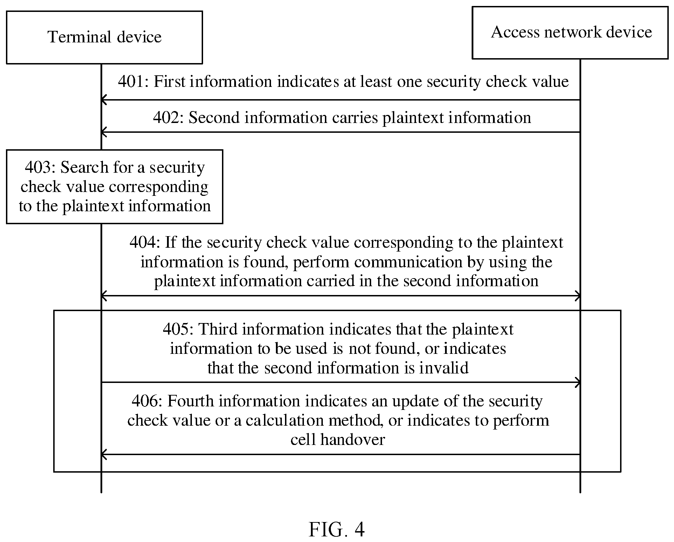

A second embodiment of this application provides a communication processing method for data transmission. As shown in a schematic diagram of system interaction in FIG. 4, the method includes the following content. A difference between the method provided in the first embodiment and the method provided in the second embodiment lies in that plaintext information to be actually used by a terminal device is directly sent by an access network device in a plaintext manner, and a security check value is obtained by performing security check on the plaintext information, to determine whether the plaintext information is secure.

401: The terminal device receives first information sent by the access network device, where the first information indicates at least one security check value.

In 401, the first information may be carried in an RRC message, and integrity protection may be performed on the RRC message at a PDCP layer. For details, refer to the description in the first embodiment.

In 401, the at least one security check value may be fixed-length data or a fixed-length character string derived based on a security algorithm. For details, refer to the description in the first embodiment. A plurality of security check values indicated by the first information may be separately carried in different messages of a same message type or carried in a same message. For example, some security check values are sent by using one RRC reconfiguration message, and then the other security check values are sent by using another RRC reconfiguration message, or all security check values are sent by using one RRC reconfiguration message.

Optionally, the method for calculating the at least one security check value, namely, the security algorithm, may be indicated by the access network device in the first information, or may be preset on the terminal device during factory production or in an online software upgrade manner.

The terminal device may store the at least one security check value for subsequent check.

402: The access network device sends second information to the terminal device, where the second information carries plaintext information.

In 402, the second information may be an RRC message, a physical layer channel, or a MAC layer message, and content included in the plaintext information carried in the second information. For details, refer to the description in the first embodiment.

403: The terminal device determines, based on the plaintext information carried in the second information, a security check value corresponding to the plaintext information, and searches the at least one security check value for the security check value corresponding to the plaintext information.

The terminal device may use, based on the security algorithm indicated by the first information or the preset security algorithm, the plaintext information carried in the second information as an input of the security algorithm, to determine the security check value corresponding to the plaintext information, so as to perform security check. In other words, the terminal device compares a security check value obtained through calculation with the security check value indicated by the first information. If a corresponding security check value can be found to match the security check value, the second information is considered to be valid; otherwise, the second message is considered to be invalid.

404: If the security check value corresponding to the plaintext information is found, the terminal device determines that the plaintext information carried in the second information is the plaintext information to be used by the terminal device.

Optionally, 405: If the security check value corresponding to the plaintext information is not found, the terminal device sends third information to the access network device, where the third information indicates that the plaintext information to be used by the terminal device is not found, or indicates that the second information is invalid.

The terminal device may determine, based on the plaintext information carried in the second information and the method for calculating the security check value, the security check value corresponding to the plaintext information. If the terminal device can find, from the at least one security check value indicated by the first information, the security check value corresponding to the plaintext information, it indicates that the plaintext information carried in the second information is the plaintext information to be actually used by the terminal device, and subsequent communication is performed based on the plaintext information. If the security check value corresponding to the plaintext information is not found, the terminal device determines that the security check value corresponding to the plaintext information is not found, or the second information may be invalid because the second information is tampered with. Optionally, if the security check value corresponding to the plaintext information is not found, the terminal device discards the second information.

Optionally, the third information further carries a reason why the second information is invalid, and content indicated by the second information.

The reason why the second information is invalid may include: The terminal device does not find the plaintext information to be actually used, or the security check value determined based on the plaintext information carried in the second information does not match the security check value indicated by the first information. The content indicated by the second information may include the plaintext information carried in the second information, the security check value determined based on the security algorithm and the plaintext information carried in the second information, or second information received by the terminal device (so that the access network device checks whether the second information is consistent with the sent second information, to identify an attack and an attack means).

Optionally, after 405, the method further includes:
406: The access network device further sends fourth information to the terminal device, where the fourth information indicates an update of the at least one security check value, or a method for calculating the at least one security check value, or indicates the terminal device to perform cell handover.

In 406, the access network device receives a feedback of the third information, and may determine a reason why the terminal device does not find the plaintext information to be actually used. In one aspect, if the reason is that the security check values are inconsistent, the access network device may indicate, to the terminal device, the update of the at least one security check value or the method for calculating the at least one security check value, so that the terminal device performs search again. In another aspect, if the reason is that communication link security of a current serving cell is not high, the current access network device may indicate the terminal device to hand over from the current serving cell to a target serving cell with relatively high communication link security.

According to the technical solution provided in the second embodiment, the access network device preconfigures the at least one security check value for the terminal device, and the plaintext information is still indicated in a plaintext manner in subsequent communication. The terminal device can obtain, through calculation based on the plaintext information, the security check value corresponding to the plaintext information, and search the configured at least one security check value for the security check value obtained through calculation, to determine whether the plaintext information is valid, so as to reduce security risks caused because the plaintext information is tampered with. A difference from the technical solution provided in the first embodiment lies in that the access network device may not need to preconfigure at least one piece of plaintext information for the terminal device. This reduces bit overheads of the first information.

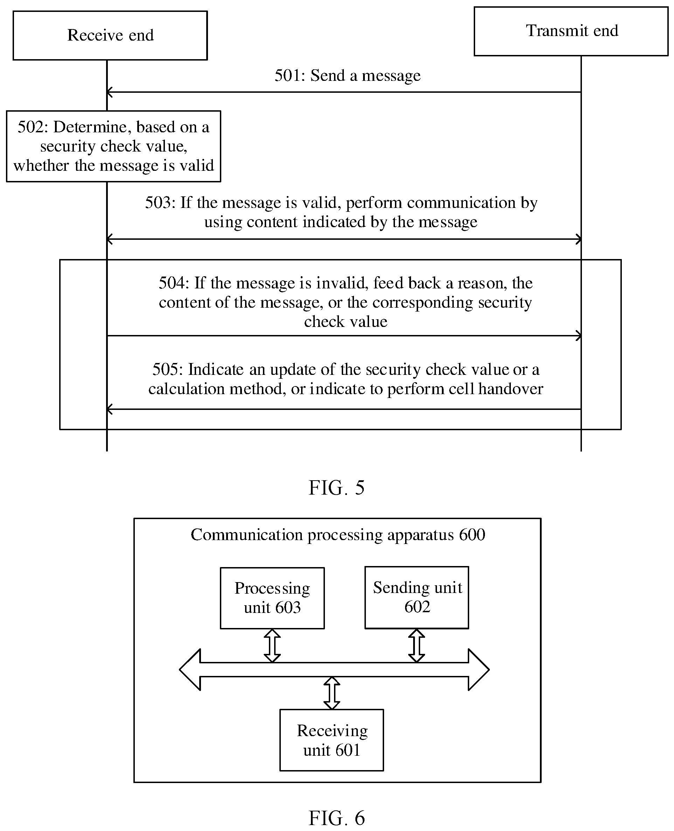

A third embodiment of this application provides a secure communication method. As shown in a schematic diagram of system interaction in FIG. 5, the method includes the following content. The method provided in the third embodiment may be independent of the method implementations of the first embodiment and the second embodiment, or may be used as a supplement to the first embodiment and the second embodiment.

501: A transmit end sends a message to a receive end.

In an uplink, the transmit end is a terminal device, and the receive end is an access network device. In a downlink, the transmit end is the access network device, and the receive end is the terminal device.

502: The receive end determines, based on a security check value, whether the message is valid.

Optionally, the receive end may determine, according to the method provided in the first embodiment or the second embodiment, whether the message is valid.

503: If the message is valid, the receive end performs subsequent communication based on content indicated by the message.

504: If the message is invalid, the receive end sends a feedback on the message to the transmit end, where the feedback includes at least one piece of the following information: a reason why the message is invalid, the content of the message, and a security check value of the message obtained through calculation based on the message.

The reason why the message is invalid may include: The receive end does not find plaintext information to be actually used, or the security check value determined based on the message does not exist. The content of the message may include the security check value determined based on the message and a security algorithm, content carried in the message, or a message received by the receive end (so that the transmit end checks whether the message is consistent with the sent message).

505: The receive end determines, based on the feedback on the message, that the message is insecure, and sends indication information to the transmit end, where the indication information indicates an update of the security check value, or a method for calculating the security check value, or indicates the receive end to perform cell handover.

In 505, the indication information may be an RRC message, and security protection is performed at a PDCP layer.

According to the technical solution provided in the third embodiment, the receive end feeds back, to the transmit end, whether the received message is valid, so that the transmit end indicates a further operation. This reduces occurrence of a security risk.

A fourth embodiment of this application provides a communication processing apparatus 600. As shown in a schematic diagram of a structure of units of the communication processing apparatus in FIG. 6, the communication processing apparatus 600 includes a receiving unit 601 and a sending unit 602.

The communication processing apparatus 600 provided in the fourth embodiment of this application may be the terminal device or the access network device in the foregoing method embodiments. Correspondingly, the communication processing apparatus 600 further includes a processing unit 603. Specifically, the receiving unit 601 is configured to perform a receiving action of the terminal device or the access network device in the foregoing embodiments, the sending unit 602 is configured to perform a sending action of the terminal device or the access network device, and the processing unit 603 is configured to perform processing actions such as determining and adjustment of the terminal device or the access network device. For details, refer to content described in the foregoing method embodiments.

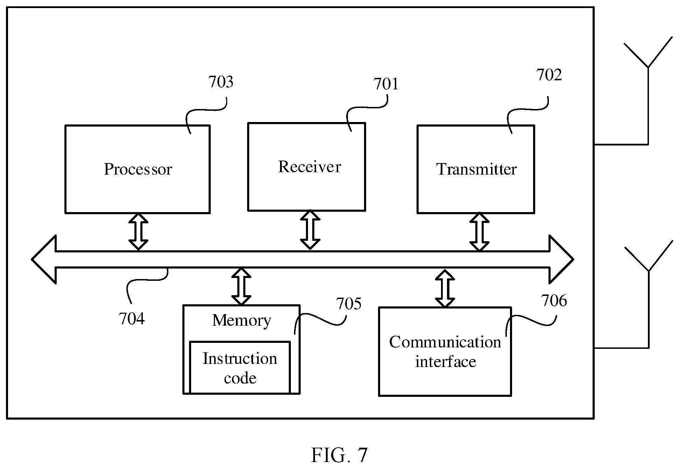

In a specific hardware implementation, as shown in a schematic diagram of a structure of hardware of the communication processing apparatus in FIG. 7, a function of the receiving unit 601 may be specifically implemented by a receiver 701, a function of the sending unit 602 may be implemented by a transmitter 702, and a function of the processing unit 603 may be specifically implemented by a processor 703. The communication processing apparatus may further include various electronic lines, for example, a bus 704, a memory 705, and a communication interface 706. The memory may include instruction code. When being invoked by the processor 703, the instruction code is used to implement the method steps in the foregoing method embodiments.

The communication interface may be a wired communication interface, a wireless communication interface, or a combination thereof. The wired communication interface may be, for example, an ethernet interface. The ethernet interface may be an optical interface, an electrical interface, or a combination thereof. The wireless communication interface may be a wireless local area network interface.

The bus may be a peripheral component interconnect (peripheral component interconnect, PCI) bus or an extended industry standard architecture (extended industry standard architecture, EISA) bus, or the like. The bus may be classified into an address bus, a data bus, a control bus, and the like.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of computer program product that is implemented on one or more computer-readable storage media (including but not limited to a disk memory, a CD-ROM, an optical memory, and the like) that include a computer program.

This application is described with reference to the flowcharts and/or block diagrams of the method, the apparatus (the system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computerimplemented processing. Therefore, the instructions executed on the computer or the another programmable device provide steps for implementing a specific function in one or more procedures in the flowcharts and/or in one or more blocks in the block diagrams.

## Claims

1. A secure communication method in a wireless communication system, comprising:
receiving (301), by a terminal device, first information sent by an access network device, wherein the first information indicates a correspondence between at least one piece of plaintext information and at least one security check value;
receiving (302), by the terminal device, second information sent by the access network device, wherein the second information carries a security check value;
searching (303), by the terminal device based on the second information, the correspondence for plaintext information corresponding to the security check value; and
if the plaintext information corresponding to the security check value is found, determining, by the terminal device, that the plaintext information corresponding to the security check value in the correspondence is plaintext information to be used by the terminal device.

2. The method according to claim 1, wherein the method further comprises:
when the terminal device successfully receives the first information, sending, by the terminal device, response information for the first information to the access network device, wherein the response information indicates that the first information is successfully received.

3. The method according to any one of claims 1 or 2, wherein the at least one piece of plaintext information comprises at least one of the following:
cell identifier information of a serving cell, cell identifier information of a neighboring cell of the serving cell, identifier information of a cell group to which the serving cell belongs, identifier information of a cell group to which the neighboring cell of the serving cell belongs, beam information of the serving cell or the neighboring cell, and activation or deactivation information of a secondary cell of the terminal device.

4. The method according to any one of claims 1 to 3, wherein the method further comprises:
if the plaintext information to be used by the terminal device is not found, discarding, by the terminal device, the second information.

5. The method according to any one of claims 1 to 4, wherein the method further comprises:
if the plaintext information to be used by the terminal device is not found, sending, by the terminal device, third information to the access network device, wherein the third information indicates that the plaintext information to be used by the terminal device is not found, or indicates that the second information is invalid.

6. The method according to claim 5, wherein the method further comprises:
receiving, by the terminal device, fourth information sent by the access network device, wherein the fourth information indicates an update of the at least one security check value or a method for calculating the at least one security check value, or indicates the terminal device to perform cell handover.

7. A secure communication method in a wireless communication system, comprising:
sending (301), by an access network device, first information to a terminal device, wherein the first information indicates a correspondence between at least one piece of plaintext information and at least one security check value;
sending (302), by the access network device, second information to the terminal device, wherein the second information carries a security check value, and the security check value is used by the terminal device to search for plaintext information to be used by the terminal device;
receiving (305), by the access network device, third information sent by the terminal device, wherein the third information indicates that the plaintext information to be used by the terminal device is not found, or indicates that the second information is invalid; and
sending (306), by the access network device, fourth information to the terminal device, wherein the fourth information indicates an update of the at least one security check value or a method for calculating the at least one security check value, or indicates the terminal device to perform cell handover,
wherein the security check value carried in the second information is configured to enable the terminal device to search the correspondence for plaintext information corresponding to the security check value so that the plaintext information can be determined to be the plaintext information to be used by the terminal device when the plaintext information corresponding to the security check value is found by the terminal device.

8. The method according to claim 7, wherein the method further comprises:receiving, by the access network device, response information for the first information that is sent by the terminal device, wherein the response information indicates that the first information is successfully received.

9. The method according to any one of claims 7 or 8, wherein the at least one piece of plaintext information comprises at least one of the following:
cell identifier information of a serving cell, cell identifier information of a neighboring cell of the serving cell, identifier information of a cell group to which the serving cell belongs, identifier information of a cell group to which the neighboring cell of the serving cell belongs, beam information of the serving cell or the neighboring cell, and activation or deactivation information of a secondary cell of the terminal device.

10. A communication processing apparatus (600), which is configured to implement the method according to any one of claims 1 to 6.

11. A communication processing apparatus (600), which is configured to implement the method according to any one of claims 7 to 9.

12. A computer-readable storage medium, wherein the storage medium stores a computer program, which when the computer program is invoked by a computer implements the method according to any one of claims 1 to 6.

13. A computer-readable storage medium, wherein the storage medium stores a computer program, which when the computer program is invoked by a computer implements the method according to any one of claims 7 to 9.

14. A computer program product, wherein the computer program product comprises a computer program which when invoked by a computer implements the method according to any one of claims 1 to 6.

15. A computer program product, wherein the computer program product comprises a computer program which when invoked by a computer implements the method according to any one of claims 7 to 9.

## Patentansprüche

1. Sicheres Kommunikationsverfahren in einem drahtlosen Kommunikationssystem, umfassend:
Empfangen (301) von ersten Informationen, die durch eine Zugangsnetzwerkvorrichtung gesendet werden, durch eine Endgerätevorrichtung, wobei die ersten Informationen eine Entsprechung zwischen mindestens einer Klartextinformation und mindestens einem Sicherheitsprüfwert angeben;
Empfangen (302) von zweiten Informationen, die durch die Zugangsnetzwerkvorrichtung gesendet werden, durch die Endgerätevorrichtung, wobei die zweiten Informationen einen Sicherheitsprüfwert enthalten;
Suchen (303) nach der Entsprechung für Klartextinformationen entsprechend dem Sicherheitsprüfwert durch die Endgerätevorrichtung basierend auf den zweiten Informationen; und
sofern die Klartextinformationen entsprechend dem Sicherheitsprüfwert gefunden werden, Bestimmen durch die Endgerätevorrichtung, dass die Klartextinformationen entsprechend dem Sicherheitsprüfwert in der Entsprechung Klartextinformationen sind, die durch die Endgerätevorrichtung zu verwenden sind.

2. Verfahren nach Anspruch 1, wobei das Verfahren ferner Folgendes umfasst:
wenn die Endgerätevorrichtung die ersten Informationen erfolgreich empfängt, Senden von Antwortinformationen für die ersten Informationen durch die Endgerätevorrichtung an die Zugangsnetzwerkvorrichtung, wobei die Antwortinformationen angeben, dass die ersten Informationen erfolgreich empfangen wurden.

3. Verfahren nach einem der Ansprüche 1 oder 2, wobei die mindestens eine Klartextinformation mindestens eines der Folgenden umfasst:
Zellkennungsinformationen einer versorgenden Zelle, Zellkennungsinformationen einer Nachbarzelle der versorgenden Zelle, Kennungsinformationen einer Zellgruppe, zu welcher die versorgende Zelle gehört, Kennungsinformationen einer Zellgruppe, zu welcher die Nachbarzelle der versorgenden Zelle gehört, Strahlinformationen der versorgenden Zelle oder der Nachbarzelle und Aktivierungs- oder Deaktivierungsinformationen einer sekundären Zelle der Endgerätevorrichtung.

4. Verfahren nach einem der Ansprüche 1 bis 3, wobei das Verfahren ferner Folgendes umfasst:
sofern die durch die Endgerätevorrichtung zu verwendenden Klartextinformationen nicht gefunden werden, Verwerfen der zweiten Informationen durch die Endgerätevorrichtung.

5. Verfahren nach einem der Ansprüche 1 bis 4, wobei das Verfahren ferner Folgendes umfasst:
sofern die durch die Endgerätevorrichtung zu verwendenden Klartextinformationen nicht gefunden werden, Senden von dritten Informationen durch die Endgerätevorrichtung an die Zugangsnetzwerkvorrichtung, wobei die dritten Informationen angeben, dass die durch die Endgerätevorrichtung zu verwendenden Klartextinformationen nicht gefunden wurden, oder angeben, dass die zweiten Informationen ungültig sind.

6. Verfahren nach Anspruch 5, wobei das Verfahren ferner Folgendes umfasst:
Empfangen von vierten Informationen, die durch die Zugangsnetzwerkvorrichtung gesendet werden, durch die Endgerätevorrichtung, wobei die vierten Informationen eine Aktualisierung des mindestens einen Sicherheitsprüfwerts oder ein Verfahren zum Berechnen des mindestens einen Sicherheitsprüfwerts angeben oder die Endgerätevorrichtung anweisen, eine Zellenübergabe durchzuführen.

7. Sicheres Kommunikationsverfahren in einem drahtlosen Kommunikationssystem, umfassend:
Senden (301) von ersten Informationen durch eine Zugangsnetzwerkvorrichtung an eine Endgerätevorrichtung, wobei die ersten Informationen eine Entsprechung zwischen mindestens einer Klartextinformation und mindestens einem Sicherheitsprüfwert angeben;
Senden (302) von zweiten Informationen durch die Zugangsnetzwerkvorrichtung an die Endgerätevorrichtung, wobei die zweiten Informationen einen Sicherheitsprüfwert enthalten und der Sicherheitsprüfwert durch die Endgerätevorrichtung verwendet wird, um nach Klartextinformationen zu suchen, die durch die Endgerätevorrichtung zu verwenden sind;
Empfangen (305) von dritten Informationen, die durch die Endgerätevorrichtung gesendet werden, durch die Zugangsnetzwerkvorrichtung, wobei die dritten Informationen angeben, dass die durch die Endgerätevorrichtung zu verwendenden Klartextinformationen nicht gefunden wurden, oder angeben, dass die zweiten Informationen ungültig sind; und
Senden (306) von vierten Informationen durch die Zugangsnetzwerkvorrichtung an die Endgerätevorrichtung, wobei die vierten Informationen eine Aktualisierung des mindestens einen Sicherheitsprüfwerts oder ein Verfahren zum Berechnen des mindestens einen Sicherheitsprüfwerts angeben oder die Endgerätevorrichtung anweisen, eine Zellenübergabe durchzuführen,
wobei der in den zweiten Informationen enthaltene Sicherheitsprüfwert dazu konfiguriert ist, die Endgerätevorrichtung in die Lage zu versetzen, die Entsprechung für Klartextinformationen entsprechend dem Sicherheitsprüfwert zu suchen, sodass die Klartextinformationen als die durch die Endgerätevorrichtung zu verwendenden Klartextinformationen bestimmt werden können, wenn die Klartextinformationen entsprechend dem Sicherheitsprüfwert durch die Endgerätevorrichtung gefunden werden.

8. Verfahren nach Anspruch 7, wobei das Verfahren ferner Folgendes umfasst: Empfangen von Antwortinformationen durch die Zugangsnetzwerkvorrichtung für die ersten Informationen, die durch die Endgerätevorrichtung gesendet werden, wobei die Antwortinformationen angeben, dass die ersten Informationen erfolgreich empfangen wurden.

9. Verfahren nach einem der Ansprüche 7 oder 8, wobei mindestens eine Klartextinformation mindestens eines der Folgenden umfasst: Zellkennungsinformationen einer versorgenden Zelle, Zellkennungsinformationen einer Nachbarzelle der versorgenden Zelle, Kennungsinformationen einer Zellgruppe, zu welcher die versorgende Zelle gehört, Kennungsinformationen einer Zellgruppe, zu welcher die Nachbarzelle der versorgenden Zelle gehört, Strahlinformationen der versorgenden Zelle oder der Nachbarzelle und Aktivierungs- oder Deaktivierungsinformationen einer sekundären Zelle der Endgerätevorrichtung.

10. Kommunikationsverarbeitungseinrichtung (600), welche dazu konfiguriert ist, das Verfahren nach einem der Ansprüche 1 bis 6 zu implementieren.

11. Kommunikationsverarbeitungseinrichtung (600), welche dazu konfiguriert ist, das Verfahren nach einem der Ansprüche 7 bis 9 zu implementieren.

12. Computerlesbares Speichermedium, wobei das Speichermedium ein Computerprogramm speichert, welches beim Aufrufen des Computerprogramms durch einen Computer das Verfahren nach einem der Ansprüche 1 bis 6 implementiert.

13. Computerlesbares Speichermedium, wobei das Speichermedium ein Computerprogramm speichert, welches beim Aufrufen des Computerprogramms durch einen Computer das Verfahren nach einem der Ansprüche 7 bis 9 implementiert.

14. Computerprogrammprodukt, wobei das Computerprogrammprodukt ein Computerprogramm umfasst, welches beim Aufrufen durch einen Computer das Verfahren nach einem der Ansprüche 1 bis 6 implementiert.

15. Computerprogrammprodukt, wobei das Computerprogrammprodukt ein Computerprogramm umfasst, welches beim Aufrufen durch einen Computer das Verfahren nach einem der Ansprüche 7 bis 9 implementiert.

## Revendications

1. Procédé de communication sécurisée dans un système de communication sans fil, comprenant :
la réception (301), par un dispositif terminal, de premières informations envoyées par un dispositif de réseau d'accès, dans lequel les premières informations indiquent une correspondance entre au moins une information en clair et au moins une valeur de contrôle de sécurité ;
la réception (302), par le dispositif terminal, de deuxièmes informations envoyées par le dispositif de réseau d'accès, dans lequel les deuxièmes informations transportent une valeur de contrôle de sécurité ;
la recherche (303), par le dispositif terminal sur la base des deuxièmes informations, de la correspondance pour les informations en clair correspondant à la valeur de contrôle de sécurité ; et
si les informations en texte clair correspondant à la valeur de contrôle de sécurité sont trouvées, la détermination, par le dispositif terminal, que les informations en texte clair correspondant à la valeur de contrôle de sécurité dans la correspondance sont des informations en texte clair à utiliser par le dispositif terminal.

2. Procédé selon la revendication 1, dans lequel le procédé comprend également :
lorsque le dispositif terminal reçoit avec succès les premières informations, l'envoi, par le dispositif terminal, d'informations de réponse pour les premières informations au dispositif de réseau d'accès, dans lequel les informations de réponse indiquent que les premières informations ont été reçues avec succès.

3. Procédé selon l'une quelconque des revendications 1 ou 2, dans lequel l'au moins une information en texte clair comprend au moins l'une :
des informations d'identifiant de cellule d'une cellule de desserte, des informations d'identifiant de cellule d'une cellule voisine de la cellule de desserte, des informations d'identifiant d'un groupe de cellules auquel appartient la cellule de desserte, des informations d'identifiant d'un groupe de cellules auquel appartient la cellule voisine de la cellule de desserte, des informations de faisceau de la cellule de desserte ou de la cellule voisine, et des informations d'activation ou de désactivation d'une cellule secondaire du dispositif terminal.

4. Procédé selon l'une quelconque des revendications 1 à 3, dans lequel le procédé comprend également :
si les informations en texte clair à utiliser par le dispositif terminal ne sont pas trouvées, le rejet, par le dispositif terminal, des deuxièmes informations.

5. Procédé selon l'une quelconque des revendications 1 à 4, dans lequel le procédé comprend également :
si les informations en clair à utiliser par le dispositif terminal ne sont pas trouvées, l'envoi, par le dispositif terminal, de troisièmes informations au dispositif de réseau d'accès, dans lequel les troisièmes informations indiquent que les informations en clair à utiliser par le dispositif terminal ne sont pas trouvées, ou indiquent que les deuxièmes informations ne sont pas valides.

6. Procédé selon la revendication 5, dans lequel le procédé comprend également :
la réception, par le dispositif terminal, de quatrièmes informations envoyées par le dispositif de réseau d'accès, dans lequel les quatrièmes informations indiquent une mise à jour de l'au moins une valeur de contrôle de sécurité ou un procédé de calcul de l'au moins une valeur de contrôle de sécurité, ou indiquent au dispositif terminal de réaliser un transfert de cellule.

7. Procédé de communication sécurisée dans un système de communication sans fil, comprenant :
l'envoi (301), par un dispositif de réseau d'accès, de premières informations à un dispositif terminal, dans lequel les premières informations indiquent une correspondance entre au moins une information en clair et au moins une valeur de contrôle de sécurité ;
l'envoi (302), par le dispositif de réseau d'accès, de deuxièmes informations au dispositif terminal, dans lequel les deuxièmes informations transportent une valeur de contrôle de sécurité, et la valeur de contrôle de sécurité est utilisée par le dispositif terminal pour rechercher des informations en texte clair à utiliser par le dispositif terminal ;
la réception (305), par le dispositif de réseau d'accès, de troisièmes informations envoyées par le dispositif terminal, dans lequel les troisièmes informations indiquent que les informations en clair à utiliser par le dispositif terminal ne sont pas trouvées, ou indiquent que les deuxièmes informations ne sont pas valides ; et
l'envoi (306), par le dispositif de réseau d'accès, de quatrièmes informations au dispositif terminal, dans lequel les quatrièmes informations indiquent une mise à jour de l'au moins une valeur de contrôle de sécurité ou un procédé de calcul de l'au moins une valeur de contrôle de sécurité, ou indiquent au dispositif terminal de réaliser un transfert de cellule,
dans lequel la valeur de contrôle de sécurité transportée dans les deuxièmes informations est configurée pour permettre au dispositif terminal de rechercher la correspondance pour des informations en texte clair correspondant à la valeur de contrôle de sécurité de sorte que les informations en texte clair puissent être déterminées comme étant les informations en texte clair à utiliser par le dispositif terminal lorsque les informations en texte clair correspondant à la valeur de contrôle de sécurité sont trouvées par le dispositif terminal.

8. Procédé selon la revendication 7, dans lequel le procédé comprend également : la réception, par le dispositif de réseau d'accès, d'informations de réponse pour les premières informations qui sont envoyées par le dispositif terminal, dans lequel les informations de réponse indiquent que les premières informations sont reçues avec succès.

9. Procédé selon l'une quelconque des revendications 7 ou 8, dans lequel l'au moins une information en texte clair comprend au moins l'une :
des informations d'identifiant de cellule d'une cellule de desserte, des informations d'identifiant de cellule d'une cellule voisine de la cellule de desserte, des informations d'identifiant d'un groupe de cellules auquel appartient la cellule de desserte, des informations d'identifiant d'un groupe de cellules auquel appartient la cellule voisine de la cellule de desserte, des informations de faisceau de la cellule de desserte ou de la cellule voisine, et des informations d'activation ou de désactivation d'une cellule secondaire du dispositif terminal.

10. Appareil de traitement de communication (600), qui est configuré pour mettre en œuvre le procédé selon l'une quelconque des revendications 1 à 6.

11. Appareil de traitement de communication (600), qui est configuré pour mettre en œuvre le procédé selon l'une quelconque des revendications 7 à 9.

12. Support de stockage lisible par ordinateur, dans lequel le support de stockage stocke un programme informatique, qui lorsque le programme informatique est invoqué par un ordinateur met en œuvre le procédé selon l'une quelconque des revendications 1 à 6.

13. Support de stockage lisible par ordinateur, dans lequel le support de stockage stocke un programme informatique, qui lorsque le programme informatique est invoqué par un ordinateur met en œuvre le procédé selon l'une quelconque des revendications 7 à 9.

14. Produit de programme informatique, dans lequel le produit de programme informatique comprend un programme informatique qui lorsqu'il est invoqué par un ordinateur met en œuvre le procédé selon l'une quelconque des revendications 1 à 6.

15. Produit de programme informatique, dans lequel le produit de programme informatique comprend un programme informatique qui lorsqu'il est invoqué par un ordinateur met en œuvre le procédé selon l'une quelconque des revendications 7 à 9.
